# EUROPEAN PATENT APPLICATION

(11) **EP 0 814 622 A2**
(43) Date of publication of application: **29.12.1997**
(21) Application number: 97110134.0
(22) Date of filing: 20.06.1997
(51) Int. Cl.: H04Q 7/18

(54) **Selective calling receiver and system for sharing selective calling numbers and information calling numbers**

(30) Priority: 21.06.1996 JP 162127/96
(71) Applicant: NEC CORPORATION, Tokyo (JP)
(72) Inventor: Amma, Sadayuki, Kakegawa-shi, Shizuoka (JP)
(74) Representative: VOSSIUS & PARTNER

(57) **Abstract**

A paging system (selective calling receiver system) has a transmission sequence between a base station and a pager (selective calling receiver). The base station of the system transmits one of the calling numbers assigned to the pager based on a predetermined timing sequence. The pager receives a calling number from the base station. A memory of the pager stores calling numbers and prohibited codes assigned there to. The prohibit codes indicates whether the stored calling numbers are allowed or prohibited, and is coordinated with the predetermined timing sequence of the base station. The pager evaluates whether the received calling number is the same as one of the allowed calling numbers stored in the memory and notifies a user of the pager of receipt of an allowed call.

## Description

The present invention relates to a selective calling receiver and its system, and more particularly to a selective calling receiver and its system dealing with a communication sequence of selective calling numbers and information calling numbers.

In recent years, selective calling receivers (hereafter referred to as "pagers") have been significantly improved and spread across all the age groups. Conventional pagers have their selective calling number and store it therein. The stored selective calling number is compared to a received selective calling number. If the received selective calling number is the same as the stored selective calling number, the pager generates an alarm for notifying a user of the pager of the call, and displays a message accompanying the received selective calling number.

Further, new information provision services such as weather forecasts and news which use electromagnetic waves have recently been developed, and people use their pagers for such information. The pagers store their information calling numbers assigned to the weather forecasts and news, and if the received information calling number is the same as one of their stored numbers, the pager generates an alarm and displays information accompanying the received information calling number, such as weather forecasts and news.

However, since each pager has a plurality of calling numbers, at least two numbers (the selective calling number and at least one information calling number assigned to weather forecasts or news), a transmitter for the paging system must have a correspondingly increased number of transmitting lines. Thus, conventional pagers are disadvantaged in that the number of pagers that can receive information provided by new services cannot be increased unless the number of transmitting lines for the transmitter is also increased.

To improve such conventional pagers, Japanese Patent Application Laid-Open No. H2-029036 of January 31 of 1990 discloses a pager that adds an additional number to a fixed selective calling number.

In such a pager, since a plurality of pagers have the same fixed selective calling number, a service operator can transmit the same message to users of a plurality of pagers all at once by transmitting the same fixed selective calling number and the same message accompanying it. The service operator can also transmit different messages to separate users by adding the additional number to the fixed selective calling number.

However, when the service operator transmits different messages to separate users by adding the additional number to the fixed selective calling number, the amount of information transmitted at a time will be increased. In addition, if a large amount of information is provided by an information service, the amount of transmitted information will increase correspondingly. Thus, if the additional number is used to provide information services, the amount of information transmitted by new services will increase traffic. In fact, the overall traffic will be increased by simply providing the additional number without adding new services.

An object of the present invention is to provide a selective calling receiver and system for sharing selective calling numbers and information calling numbers so as to avoid increasing the number of transmitting lines.

Another object of the present invention is to provide a selective calling receiver that determines whether a received number is an allowed calling number or a prohibited calling number.

In order to achieve the above-mentioned objects, the present invention provides a receiver and system in which calling numbers may be shared. During a first time period a calling number may be used as an information calling number, and during a second, non-overlapping, time period the same calling number may be used as a selective calling number. The receiver recognizes which number is to be used in each time period by using codes which are set by a controller in the receiver, which keeps track of the time periods.

The selective calling receiver of the present invention may include a receiver for receiving a calling number, an address memory for storing preliminary calling numbers, and a prohibited circuit for deciding whether a received number is a prohibited calling number or an allowed calling number. The selective calling receiver of the invention further includes a controller for determining whether the received calling number is the same as some of the stored calling numbers and a notifying circuit for notifying a user of the receipt of a call when the controller determines that the received calling signal is the same as one of the stored calling numbers.

And also, in order to achieve the above-mentioned objects, the paging (selective calling receiver) system of the present invention includes a transmitter for transmitting one of the calling numbers assigned to the pager based on a predetermined timing sequence.

Further, the pager of this system includes a receiving circuit for receiving a calling number from the transmitter, a memory for storing calling numbers and prohibited codes assigned to the stored calling numbers wherein the prohibit codes indicating whether the stored calling numbers are allowed or prohibited, and the prohibited codes are coordinated with the predetermined timing sequence of the transmitter.

The pager also includes a controller for evaluating whether the received calling number is the same as some of the allowed calling numbers stored in the memory and a notifying circuit for notifying a user of the receipt of a call when the controller determines the received calling signal is the same as one of the allowed calling numbers.

With the above-mentioned configuration, in the present invention, the service operator can provide the prohibited calling number of the selective calling receiver (receiver 1) to another receiver (receiver 2) as a information calling number, since the prohibited calling number is not used by the receiver 1. Thus, the selective calling receiver of the present invention can receive additional information services without increasing the number of transmitting lines.

These and other objects, feature and advantages of the patent invention will become more fully apparent from the following detailed description taken in conjunction with the accompanying drawings, in which:
Fig. 1 is a representation of a paging system in which the present invention finds application;
Fig. 2 is a block diagram of a selective calling receiver according to an embodiment of the present invention;
Fig. 3 illustrates an example of an address memory shown in Fig. 2;
Fig. 4 illustrates an example of a time period memory shown in Fig. 2;
Fig. 5 shows a signal format of a POCSAG signal which is an example of a radio signal to be received by a selective calling receiver according to the present invention;
Fig. 6 is a flowchart showing the steps followed by the receiver shown in Fig. 2;
Fig. 7 is a block diagram of a selective calling receiver according to a another embodiment of the present invention;
Fig. 8 is a perspective view of the selective calling receiver of in Fig. 7;
Fig. 9 is an example of a manner of setting a time period in an embodiment of the present invention.

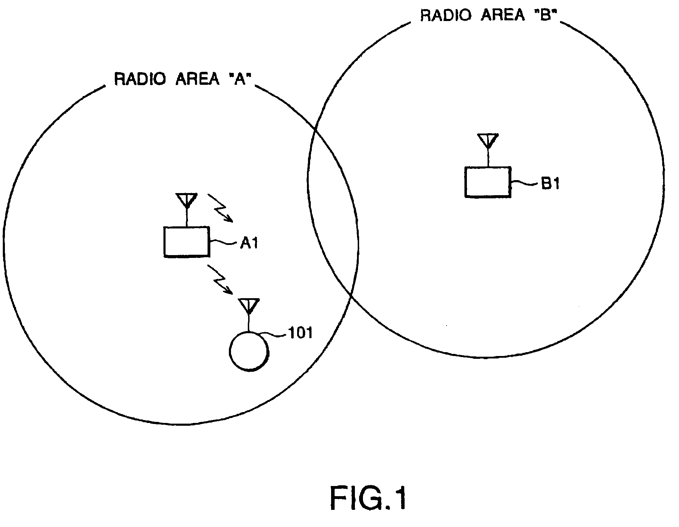

In Fig. 1, a base station A1 is positioned in a center of a radio area "A" and also a base station B1 is positioned in a center of a radio area "B". A selective calling receiver 101 (hereinafter referred to as "pager") is movable from the radio area "A" to the radio area "B", and also from the radio area "B" to the radio area "A". When the pager 101 is in the radio area "A", the pager 101 receives a radio signal from the base station A1 as shown in Figure 1, and also when the pager 101 is in the radio area "B", the pager 101 receives a radio signal from the base station B1.

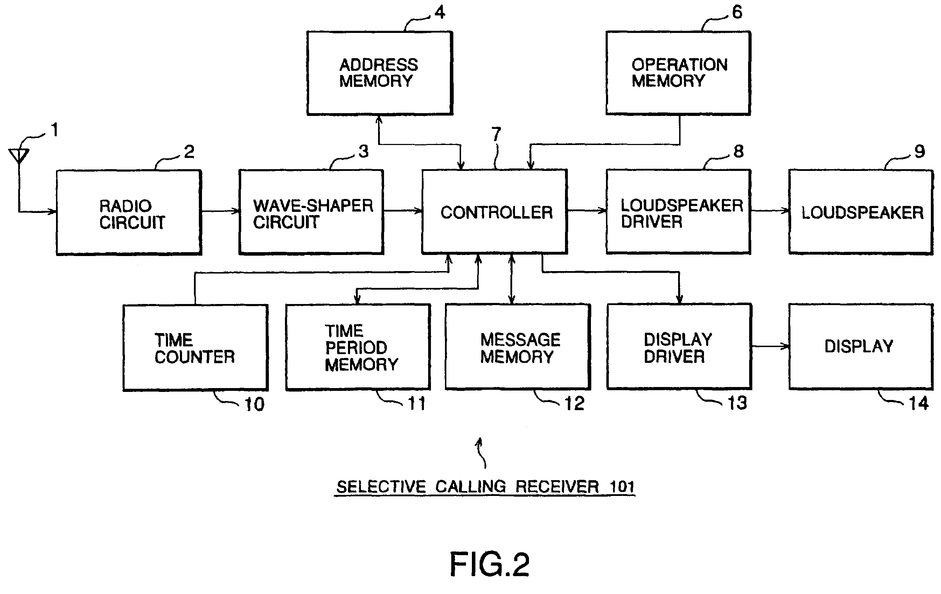

In Fig. 2, an antenna 1 of pager 101 receives the radio signal from a base station (not shown in Fig. 2) and outputs a received signal to a radio circuit 2. The radio circuit 2 amplifies the received signal from the antenna 1, demodulates it, and supplies the demodulated signal to a wave-shaper circuit 3. The waver-shaper circuit 3 wave-shapes the demodulated signal to a digital signal, and supplies the digital signal to a controller 7.

An address memory 4 stores a selective calling number and information calling numbers (described in detail later). An operation memory 6 stores an operation program to operate the controller 7. A time counter 10 measures current time and outputs a time signal to the controller 7. A time period memory 11 stores predetermined information about time periods (described in detail later). A message memory 12 stores detected messages.

The controller 7 detects a preamble signal and a frame sync. signal from the digital signal from the wave-shaper circuit 3 by decoding the received signal, and synchronizes the pager 101 with the base station. The controller 7 also detects a selective calling signal and/or a information calling signal from the digital signal by decoding the received signal, and evaluates whether the detected selective calling number and/or information calling number is the same as the stored selective calling number and/or information calling numbers in the address memory 4. If the detected and one of the stored numbers are the same, the controller 7 detects a message accompanying the detected calling number and outputs a coincidence signal to a loudspeaker driver 8, and also outputs the detected message to a display driver 13. The detected message is further stored in the message memory 12 by controller 7 as an individual message when the stored selective calling number is detected, as an information service message when the information calling number is detected.

Loudspeaker driver 8 current-amplifies the coincidence signal from the controller 7 and drives a loudspeaker 9. The loud speaker 9, driven by the current-amplified coincidence signal, generates an alarm for notifying the user that a call has been received. The display driver 13 drives a display 14 when the detected message is supplied from the controller 7 and the display 14 shows the detected message.

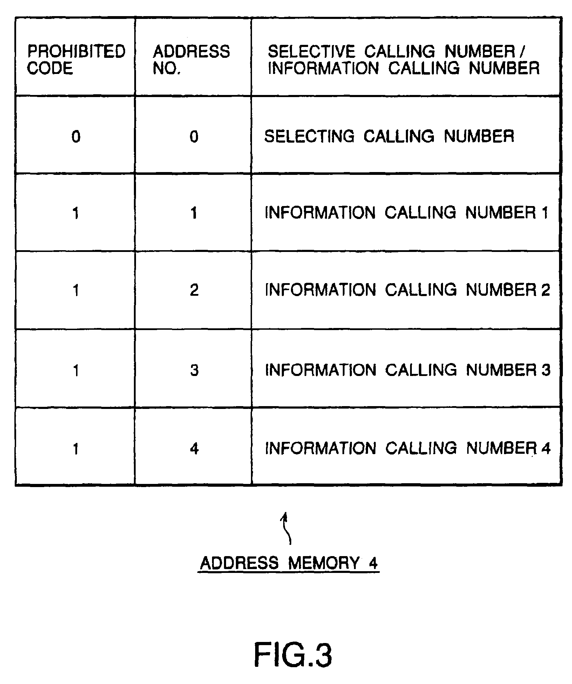

As shown in Fig. 3, the address memory 4 stores prohibited codes, the selective calling number and the information calling numbers. The prohibited code is controlled by the controller 7. When the prohibited codes is "1", the controller does not make a comparison of the received number to the stored number and does not generate an alarm. In the example of Figure 3, since the codes of the information calling numbers 1-4 are "1", the controller 7 does not make comarisons to the information calling numbers 1-4, and thus does not generate the alarm even though the received information calling number is the same as one of the information calling numbers stored in the address memory 4.

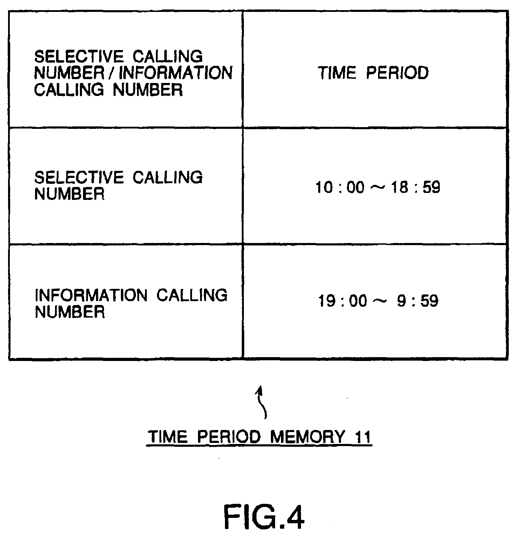

As shown in Fig. 4, the time period memory 11 may consist of P-ROM, and stores time periods for the selective calling number and the information calling numbers. The time periods may be stored by the service operator before the user gets the pager from the service operator, and show the allowed times for evaluating the similarity between a received calling number and the stored calling numbers. In this Figure, the controller 7 can evaluate the similarity of the selective calling number in the time period 10:00-18:59, and the information calling numbers in the time period 19:00-9:59. Meanwhile, the controller 7 can not evaluate the similarity of the information calling numbers in the time period 10:00-18:59, and the selective calling number in the time period 19:00-9:59. The prohibited codes in the address memory 4 are turned to code "0" by controller 7 when the calling number is allowed by time period memory 11, whereas the prohibited codes are turned to code "1" by controller 7 when the calling number is prohibited by time period memory 11.

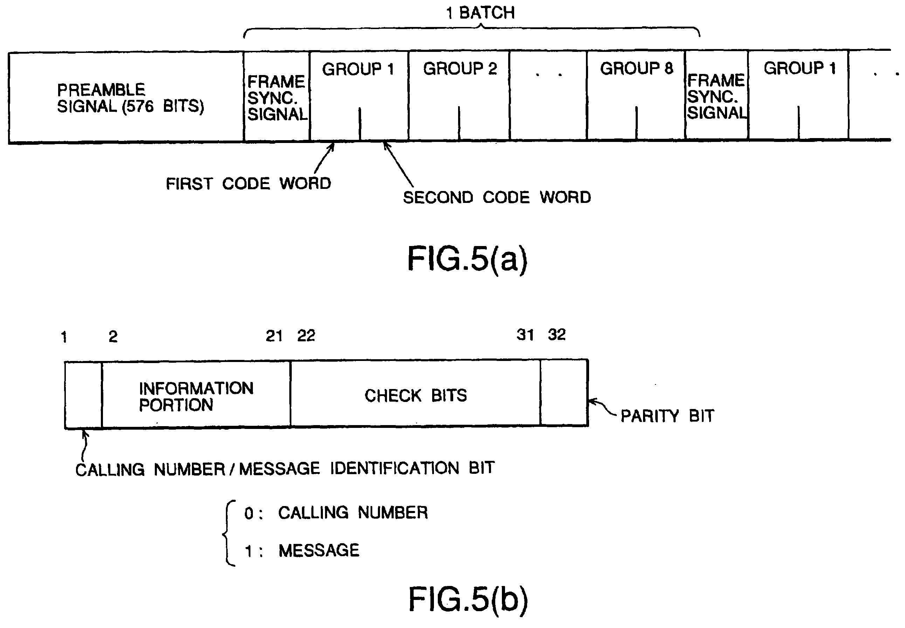

In Fig. 5(a), a radio signal transmitted from the base station may include a 576 bit preamble signal and a 32-bit frame sync. signal following the preamble signal. The preamble signal and the sync. signal are used for achieving synchronization of the pager with the base station.

The pager may belong to one of several groups, and its calling number (selective calling number or information calling number) is transmitted only in a time assigned to the group to which the pager belongs. After the power supply is turned on and the preamble signal and the sync. signal for achieving synchronization are received, the pager receives its signals only in a time assigned to the group to which the pager belongs.

A group 1 signal is transmitted to the pager after the transmission of the frame sync. signal. In Fig. 5(a), a frame sync. signal and eight groups make up one batch, and one group consists of two code words.

After one batch is transmitted, another batch is transmitted to the pager.

As shown in Fig. 5(b), the code word consists of 32 bits in total and is made up of a calling number/message identification bit (simply referred to as "identification bit" hereinbelow), information portion, check bits and a parity bit in the mentioned order.

The identification bit is one bit and is used for determining whether the code word represents a calling number or represents the message, with the code word representing the calling number when the bit is 0, whereas the same representing the message when the bit is 1.

The information portion consists of 20 bits, and the selective calling number or the information callings number is recorded in the information portion when the identification bit is 0, whereas the message is recorded in the information portion when the identification is 1.

The check bits consist of 10 bits and the parity bit consist of one bit, namely a transmission error is corrected by using a (31,20) + 1BCH signal or other appropriate checking system.

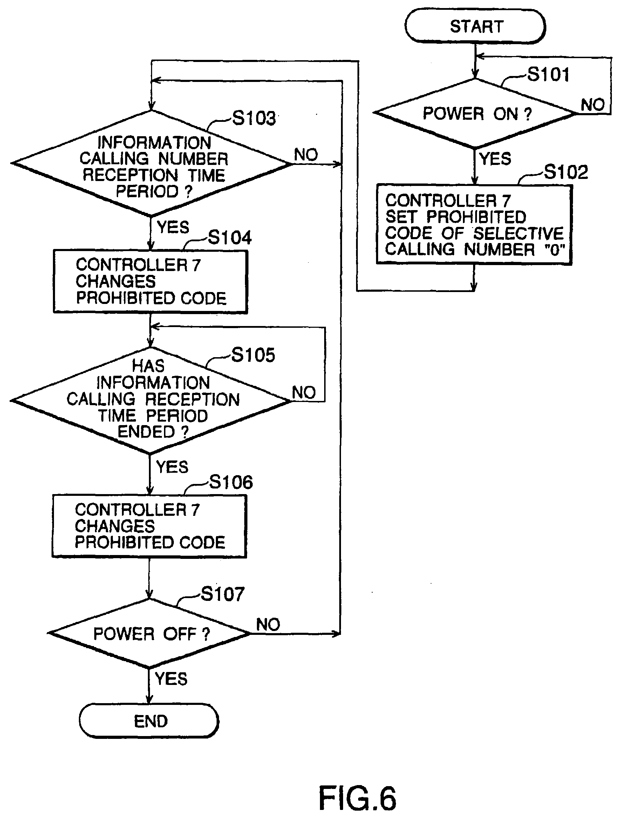

In Fig. 6, at the beginning, the controller 7 evaluates whether the power supply is turned on (STEP S101). If the power supply is turned on, the controller 7 sets the prohibited code "0" to the selective calling number and the code "1" to the information calling number(S102). Otherwise, the controller 7 waits for the power to be turned on.

After step S102, the controller 7 evaluates whether to switch from reception of selective calling number to reception of information calling numbers (S103) based on the time periods in time period memory 11. If the switch is to be made, the controller 7 changes the prohibited code of the selective calling number from "0" to "1" and the prohibits codes of the information calling number from "1" to "0" (S104). Otherwise, the controller 7 waits for the switching time. After switching at step S104, the controller 7 evaluates whether to switch back to reception of the other type of number, (S105). If the switch is to be made, the controller 7 changes the prohibited codes again (S106). Otherwise, the controller 7 waits for the switching time. After switching at step S106, the controller 7 evaluates whether the power supply is turned off (S107). If the power supply is turned off, the operation is ended. At step S107, if the power supply is not turned off, the operation feeds back to step S103.

Next, the operation of a paging system incorporating the present invention is now described.

The base station transmits either the selective calling number or the information calling number to the pager. In this transmission, only allowed calling numbers, which are indicated by the codes in address memory 4, are transmitted from the base station, since the time period stored in the address memory 4 is coordinated with the transmission time of the base station by the service operator. Thus, in this embodiment, the base station transmits the selective calling number in the time period 10:00-18:59 and the information calling number in the time period 19:00-9:59. Whereas, the base station does not transmit the information calling number in the time period 10:00-18:59 and the selective calling number in the time period 19:00-9:59.

By use of the above mentioned structure, the service operator can use the selective calling number for pager A as an information calling number for pager B. Thus, the pager system according to the present invention can provide additional information services without increasing the number of transmitting lines.

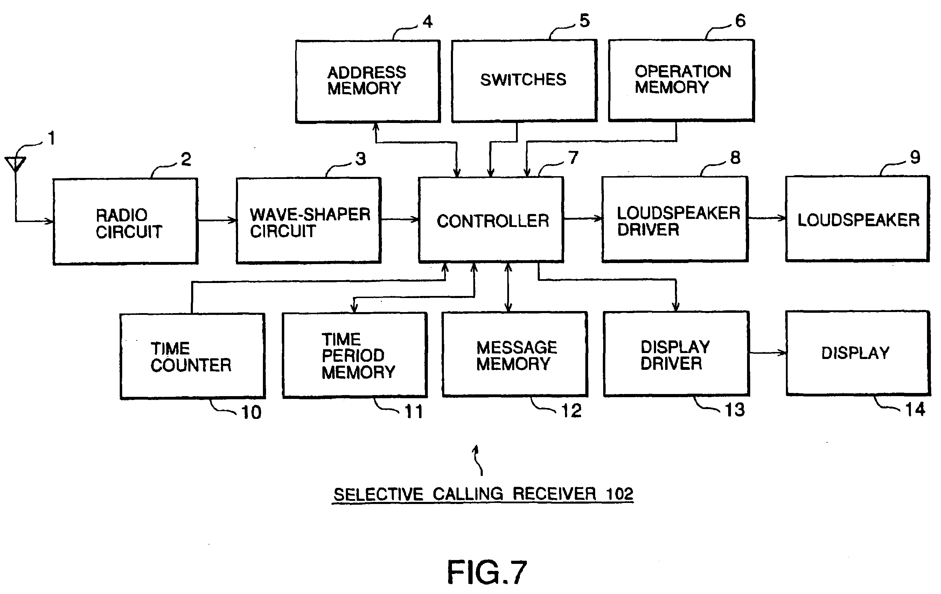

With reference now to Fig. 7, in an alternative embodiment of the present invention, the user may set the time periods. The functional block shown in Fig. 7 has the same reference numbers as Fig. 2 and an explanation of them is omitted. The difference between the embodiment shown in Fig. 7 (hereinafter referred to as embodiment 2) and the embodiment shown in Fig. 2 (hereinafter referred to as embodiment 1) is that the embodiment 2 has switches 5 on the pager 102 which are operated by the user. In the embodiment 2, the user presses the switches 5 to set the time periods of the selective calling number and the information calling numbers. Thus, in embodiment 2, the time period in address memory 4 is not coordinated with the transmission time of the base. station. While embodiment 2 may not decrease the number of transmitting lines, embodiment 2 provides another advantage in that the base station need not transmit an indication signal for analyzing a message.

In a conventional paging system, the base station transmits an indicating signal with a message, since the transmitted message may be either of two types, i.e., a numerical message and an alpha-numerical message. The message concerning information services accompanying the information calling numbers is transmitted as an alpha-numerical message, and the message accompanying the selective calling number is usually transmitted as a numerical message. An operation program for analyzing the alpha-numerical message is different from an operation program for analyzing the numerical message. Thus, the conventional pager must receive the indication signal to determine whether the received signal is an alpha-numerical or a numerical message.

Meanwhile, in the paging system of embodiment 2, the base station does not need to transmit the indicating signal, since the pager knows that the received message is either the alpha-numerical or the numerical message because the pager receives only one of the selective calling number and the information calling number as decided by the time period in the time period memory 11. Thus, in embodiment 2, the base station transmits much more information compared with the conventional pager.

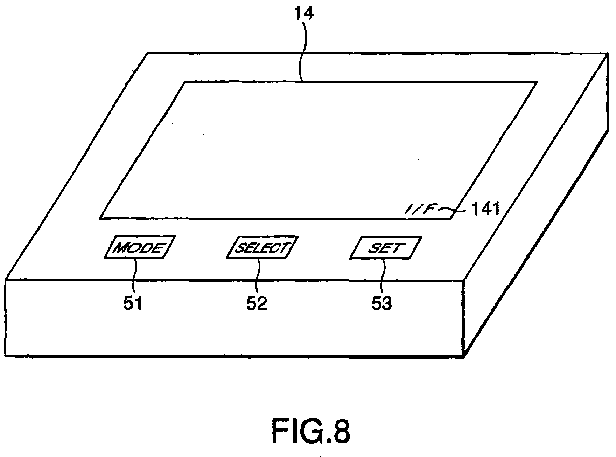

In Fig. 8, the switches consist of a MODE switch 51, a SELECT switch 52 and a SET switch 53 (these are explained in more detail later). The display 14 shows "I/F" when the information calling number is allowed.

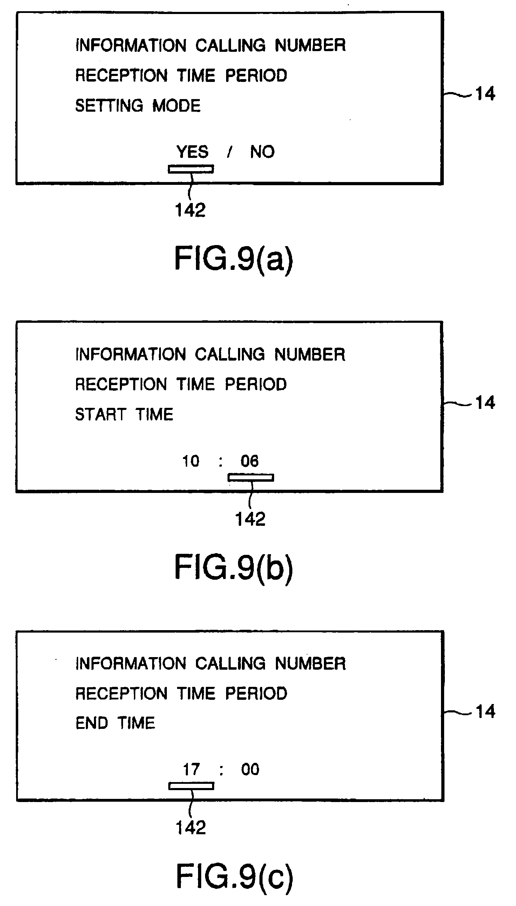

In Figs. 9(a)-9(c), MODE 51 is operated by the user when the user desires to set the time period for reception of the selective calling number and/or the information calling numbers. For example, the display 14 indicates the information "INFORMATION CALLING NUMBER RECEPTION TIME PERIOD SETTING MODE" as shown in Fig. 9(a). If the user operates the SET 52 when a underscore is below "YES", the information shown in Fig. 9(a) is changed to the information "INFORMATION CALLING NUMBER RECEPTION TIME PERIOD START TIME "shown in Fig. 9(b). Under the information described in Fig. 9(b), the user operates the SELECT 52 for selecting the starting time of reception of the information calling number. After finishing the selecting, the SET 53 is pushed, then the display shows "INFORMATION CALLING NUMBER RECEPTION TIME PERIOD END TIME" as shown in Fig. 9(c). When the information described in Fig. 9(b) is displayed, the user operates the SELECT 52 for selecting the end time of reception of the information calling number. After the selection, the SET 53 is pushed, then the information calling number reception time period 10:06-17:00 is stored in the time period memory 11. And also, the time which is not the time of reception of the information calling number, that is, 17:01-10:05, is stored in the time period memory 11 as the time period of reception of the selective calling number.

In a further embodiment of the present invention, the starting and/or ending time of reception for either the selective calling number or the information calling numbers may be transmitted from the base station, and the controller 7 switches the prohibit codes in address memory 4 by detecting the starting time from the received signal. In this case, the switches 5 and the time period memory 11 might be reduced.

Further, although the above mentioned embodiments according to the present invention has been described that the controller 7 reads the selective calling number or the information calling number from the address memory 4, it is also possible that the controller 7 has an inner memory therein, and stores only an admitted calling number to the inner memory when the prohibited code is to be switched. In this case, the access time to the address memory 4 might be reduced.

In the described embodiments various information services accompanying the information calling number are provided during the respective assigned time periods, and it is also possible to change the allowed calling number according to a date or a day-of-the-week specification.

Further, although in this embodiments, the signal format of the radio signal to be received by the pager has been described as that of the POCSAG signal, the present invention can be applied to other signal formats, such as the NTT system signal or the ERMES signal.

Obviously, numerous additional modification and variations of the present invention are possible in light of the above teachings. It is, therefore, to be understood that within the scope of the appended claims, the present invention may be practiced otherwise than as specifically described herein.

## Claims

1. A selective calling receiver comprising:
a receiver for receiving a calling number;
a memory for storing calling numbers and prohibit codes assigned to the stored calling numbers, said prohibit codes indicating whether each of the stored calling numbers is allowed or prohibited,
a controller for determining whether the received calling number is the same as one of the allowed calling numbers stored in said memory; and
a notifying circuit for notifying a user of receipt of a call when said controller deterines that the received calling signal is the same as the one of the allowed calling numbers.

2. The receiver claimed in claim 1, further comprising:
a time period memory for storing times when the stored calling numbers are allowed or prohibited.

3. The receiver claimed in claim 2, further comprising switches, operated by a user, for setting the times stored in said time period memory.

4. The receiver claimed in claim 1,2, or 3, wherein said receiver also receives a time period signal indicating when ones of the calling numbers are allowed or prohibited.

5. The receiver claimed in any of claims 1 to 4, further comprising:
a timer; and
a time period memory for storing times when the stored calling numbers are allowed or prohibited,
and said controller changes said prohibit codes when said timer achieves the time indicated by said time period memory.

6. The receiver claimed in any of claims 1 to 5, wherein said receiver also receives a time period signal indicating when ones of the calling numbers are allowed or prohibited, and said controller changes said prohibit codes stored in said memory based on the received time period signal.

7. The receiver claimed in any of claims 2 to 6, wherein said time period memory stores a date.

8. The receiver claimed in any of claims 2 to 7, wherein said time period memory stores a day-of-the-week.

9. A selective calling receiver comprising:
a receiver for receiving a radio signal including either a selective calling number or an information calling number, and said receiver further receiving either a numerical message accompanying said selective calling number or an alpha-numerical message accompanying said information calling number;
an address memory for storing a selective calling number and an information calling number, said address memory further storing prohibit codes assigned to each of the stored selective calling number and said information calling number, said prohibit codes indicating whether the stored selective calling number and the stored information calling number are allowed or prohibited,
a controller for determining whether the received radio signal includes an allowed selective calling number or an allowed information calling number;
a message memory for storing the received numerical message or the received alpha-numerical message;
a display for indicating the received numerical message or the received alpha-numerical message; and
a notifying circuit for notifying a user of receipt of a call when said controller determines that the received calling signal includes the allowed selective calling number or the allowed information calling number.

10. A paging system for transmission of signals from a base station to a pager, said paging system comprising:
the base station including, a transmitter for transmitting one of plural calling numbers assigned to the pager based in a predetermined timing sequence,
the pager including:
a receiving circuit for receiving one of the plural calling numbers from said transmitter;
a memory for storing calling numbers and prohibit codes assigned to the stored calling numbers, said prohibit codes indicating whether the stored calling numbers are allowed or prohibited, and further said prohibit code being coordinated with said predetermined timing sequence of said transmitter,
a controller for determined whether the received calling number is the same as one of the allowed calling numbers stored in said memory; and
a notifying circuit for notifying a user of receipt of a call when said controller determines that the received calling signal is the same as the one of the allowed calling numbers.
